# FASCICULE DE BREVET EUROPEEN

(11) **EP 3 701 703 B1**
(45) Date de publication et mention de la délivrance du brevet: **04.05.2022**
(21) Numéro de dépôt: 18800708.2
(22) Date de dépôt: 22.10.2018
(51) Int. Cl.: H04L 29/08

(54) **PROCEDE ET SYSTEME DE COMMUNICATION ENTRE DEUX DISPOSITIFS**
VERFAHREN UND SYSTEM ZUR KOMMUNIKATION ZWISCHEN ZWEI GERÄTEN
PROCEDE ET SYSTEME DE COMMUNICATION ENTRE DEUX DISPOSITIFS

(30) Priorité: 25.10.2017 FR 1771121
(43) Date de publication de la demande: 02.09.2020
(73) Titulaire: BULL SAS, 78340 Les Clayes Sous Bois (FR)
(72) Inventeur: MENYHART, Zoltan, 38100 Grenoble (FR); DERRADJI, Saïd, 92130 Issy les Moulineaux (FR)
(74) Mandataire: IPAZ
(86) Numéro de dépôt international: PCT/FR2018/052615
(87) Numéro de publication internationale: WO 2019/081839

(56) Documents cités:
- US-A1- 2014 328 234
- US-A1- 2016 112 944

## Description

La présente invention concerne un procédé et un système de communication entre des premier et deuxième dispositifs.

Le document US 2016/0112944 décrit un systeme qui permet la sélection du point d'accès en fonction des performances d'association.

Le document US2014/328234 décrit un système pour fournir une configuration de liaison initiale plus rapide pour utiliser des techniques permettant aux stations sans fil d'entrer dans un état de veille, c'est-à-dire un état inactif, dans lequel les composants des stations sans fil sont mis hors tension afin de réduire la consommation d'énergie pendant le processus de connexion

L'invention s'applique plus particulièrement à un procédé de communication entre des premier et deuxième dispositifs connectés l'un à l'autre, selon la revendication 1.

Il peut être souhaité de prévoir un procédé de communication entre des premier et deuxième dispositifs qui permette d'optimiser l'utilisation des ressources matérielles du premier dispositif.

Ainsi, grâce à l'invention, pendant l'intervalle de temps, le premier dispositif peut réaliser d'autres tâches que la surveillance de l'arrivée de messages, ce qui permet de mieux utiliser ses ressources matérielles.

De façon optionnelle, le procédé comporte en outre l'étape suivante :
- le deuxième dispositif compare le délai estimé à un premier seuil, et l'étape d'envoi par le deuxième dispositif de l'accusé de réception, est réalisée si le délai estimé est supérieur au premier seuil et n'est pas réalisée dans le cas contraire, de même que les autres étapes dépendant de l'envoi de l'accusé de réception.

De façon optionnelle également, le délai estimé est égal à une moyenne de délais constatés par le deuxième dispositif pour répondre à des requêtes auxquelles le deuxième dispositif a précédemment répondu.

De façon optionnelle également, le procédé comporte en outre l'étape suivante :
- le premier dispositif compare le délai estimé à un deuxième seuil, et l'étape de calcul par le premier dispositif de l'intervalle de temps est réalisée si le délai estimé est supérieur au deuxième seuil et n'est pas réalisée dans le cas contraire, de même que l'étape consistant à laisser s'écouler l'intervalle de temps avant de commencer à surveiller l'arrivée de messages.

De façon optionnelle également, l'intervalle de temps est pris proportionnel au délai estimé, selon un rapport de proportion prédéfini.

Il est également proposé un système de communication comportant des premier et deuxième dispositifs connectés l'un à l'autre, selon la revendication 6.

L'invention sera mieux comprise à l'aide de la description qui va suivre, donnée uniquement à titre d'exemple et faite en se référant aux dessins annexés dans lesquels :
- la figure 1 représente schématiquement la structure générale d'un système de communication mettant en œuvre l'invention,
- la figure 2 illustre les étapes successives d'un procédé de communication réalisé dans le système de communication de la figure 1 et mettant en œuvre l'invention, et
- les figures 3 et 4 sont des chronogrammes illustrant les échanges entre des premier et deuxième dispositifs du système de communication de la figure 1, dans respectivement deux situations différentes.

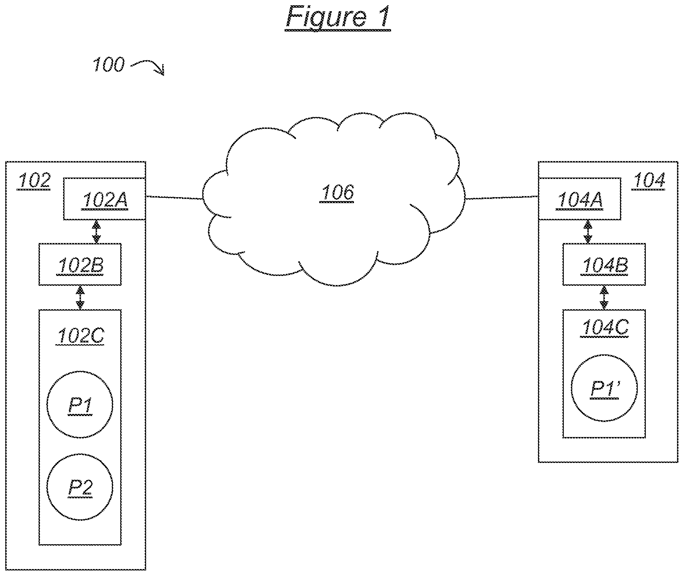

En référence à la figure 1, un système de communication 100 mettant en œuvre l'invention va à présent être décrit.

Le système de communication 100 comporte des premier et deuxième dispositifs 102, 104, ainsi qu'un réseau de communication 106 par lequel les premier et deuxième dispositifs 102, 104 sont connectés l'un à l'autre. Le réseau de communication 106 est par exemple le réseau Internet.

En particulier, chacun des premier et deuxième dispositifs 102, 104 comporte une interface réseau 102A, 104A par laquelle le premier dispositif 102, respectivement le deuxième dispositif 104, est connecté au réseau de communication 106 pour envoyer et recevoir des messages.

Par ailleurs, dans l'exemple décrit, les premier et deuxième dispositifs 102, 104 sont des dispositifs informatiques comportant chacun une unité de traitement 102B, 104B et une mémoire 102C, 104C dans laquelle sont enregistrés un ou plusieurs programmes d'ordinateur comportant des instructions destinées à être exécutées par l'unité de traitement 102B, 104B. L'unité de traitement 102B, 104B comporte par exemple un processeur et la mémoire 102C, 104C comporte par exemple une mémoire RAM (de l'anglais « Random Access Memory ») volatile. Dans ce cas, chacun des premier et deuxième dispositifs 102, 104 comporte généralement une unité de stockage non-volatile (telle qu'un disque dur) non représentée, depuis laquelle le ou les programmes d'ordinateur sont chargés dans la mémoire RAM volatile pour leur exécution.

En outre, dans l'exemple décrit, la mémoire 102C du premier dispositif 102 comporte deux programmes P1, P2 en cours d'exécution, tandis que la mémoire 104C du deuxième dispositif 104 comporte un programme P1' en cours d'exécution. Les programmes P1, P1' sont conçus pour communiquer l'un avec l'autre en échangeant des messages au travers du réseau de communication 106, c'est-à-dire en envoyant et recevant des messages.

La réception d'un message signifie dans le cadre de la présente invention que le message est prêt à être traité. De ce fait, la réception d'un message n'est effective qu'au bout de plusieurs phases. Tout d'abord, le message arrive au dispositif 102, 104, par exemple le message est enregistré dans l'interface réseau 102A, 104A, mais le programme P1, P1' n'est pas encore au courant de son arrivée. Ensuite, l'arrivée du message est détectée par le programme P1, P1'. Afin de détecter l'arrivée d'un message, le programme P1, P1' est conçu pour surveiller l'arrivée du message en interrogeant de temps en temps l'unité dans laquelle il est enregistré, l'interface réseau 102A, 104A dans l'exemple décrit (mécanisme appelé « polling » en anglais). Les interrogations peuvent être réalisées en continu, dans ce cas on parle généralement d'attente active (« busy wait » en anglais) ou bien à des intervalles réguliers ou irréguliers dans le temps. Dans tous les cas, la surveillance de l'arrivée d'un message utilise des ressources matérielles du dispositif 102, 104. Une fois l'arrivée du message détectée, le programme P1, P1' le récupère pour le traiter. À ce moment, le message est considéré comme reçu.

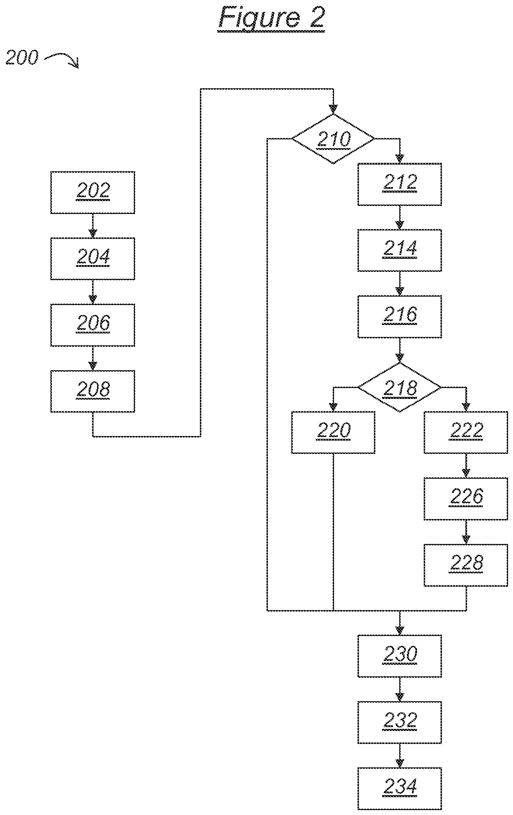

En référence à la figure 2, un procédé 200 de communication entre les premier et deuxième dispositifs 102, 104, mettant en œuvre l'invention, va à présent être décrit.

Dans l'exemple qui va suivre, lorsqu'il est indiqué qu'un dispositif 102, respectivement 104, réalise une action, cela signifie que l'unité de traitement 102B, respectivement 104B de ce dispositif 102, respectivement 104, exécute le programme P1, respectivement P1', pour réaliser cette action.

Au cours d'une étape 202, le premier dispositif 102 envoie une requête au deuxième dispositif 104.

Au cours d'une étape 204, le premier dispositif 102 commence à surveiller l'arrivée de messages pour détecter l'arrivée d'un message de la part du deuxième dispositif 104.

Au cours d'une étape 206, le deuxième dispositif 104 reçoit la requête Rq.

Au cours d'une étape 208, le deuxième dispositif 104 estime un délai D au bout duquel une réponse R à la requête Rq pourra être envoyée. Par exemple, le délai estimé D est égal à une moyenne de délais constatés par le deuxième dispositif 104 pour répondre à des requêtes auxquelles le deuxième dispositif 104 a précédemment répondu.

Au cours d'une étape 210, le deuxième dispositif 104 compare le délai estimé D à un seuil S1. Le seuil S1 permet de distinguer entre le cas où le deuxième dispositif 104 peut répondre immédiatement à la requête Rq et le cas où le deuxième dispositif 104 doit effectuer des opérations complexes et consommatrices de temps pour répondre.

Si le délai estimé D est inférieur au seuil S1, le procédé 200 passe directement à l'étape 230 d'envoi d'une réponse R par le deuxième dispositif 104. En effet, lorsque le délai estimé D est très court, il n'est pas utile d'essayer de réduire le temps de surveillance du premier dispositif 102 pour exécuter à la place d'autres tâches, car le coût pour obtenir cette réduction de temps de surveillance et pour commuter vers une autre tâche risque d'être supérieur au gain.

En revanche, si le délai estimé D est supérieur au seuil S1, les étapes suivantes sont mises en œuvre.

Au cours d'une étape 212, le deuxième dispositif 104 envoie au premier dispositif 102 un accusé de réception AR comportant le délai estimé D.

Au cours d'une étape 214, l'accusé de réception AR arrive au premier dispositif 102.

Au cours d'une étape 216, le premier dispositif 102, qui est en train de surveiller l'arrivée de messages, détecte l'arrivée de l'accusé de réception AR et le récupère. Le premier dispositif 102 arrête alors de surveiller l'arrivée de messages.

Au cours d'une étape 218, le premier dispositif 102 compare le délai estimé D à un seuil S2.

Si le délai estimé D est inférieur au seuil S2, au cours d'une étape 220, le premier dispositif 102 commence à surveiller l'arrivée de messages. Le procédé 200 passe alors directement à l'étape 230 d'envoi d'une réponse R par le deuxième dispositif 104. En effet, de même que pour le seuil S1, lorsque le délai estimé D est très court, il n'est pas utile d'essayer de réduire le temps de surveillance du premier dispositif pour exécuter à la place d'autres tâches, car le coût pour obtenir cette réduction de temps de surveillance et pour commuter vers une autre tâche risque d'être supérieur au gain. Le seuil S2 est par exemple choisi en fonction de la vitesse de traitement de données du premier dispositif 102. Par exemple, un ordinateur actuel peut mettre 100 µs pour changer de tâche (et autant pour revenir au programme P1). Ainsi, le seuil S2 est par exemple choisi supérieur à 200 µs, par exemple supérieur ou égal à 1 ms pour garder un peu de marge.

En revanche, si le délai D est supérieur au seuil S2, les étapes suivantes sont mises en œuvre.

Au cours d'une étape 222, le premier dispositif 102 calcule un intervalle de temps I à partir du délai D.

Au cours d'une étape 226, le premier dispositif 102 laisse s'écouler l'intervalle de temps I avant de commencer à surveiller l'arrivée de messages. Autrement dit, pendant l'intervalle de temps I, le premier dispositif 102 ne surveille pas l'arrivée de messages.

Par exemple, l'intervalle de temps I est pris proportionnel au délai estimé D, selon un rapport de proportion prédéfini. Dans un mode de réalisation, l'intervalle de temps I est pris égal au délai estimé D (rapport de proportion égal à 1). Alternativement, le rapport de proportion est pris inférieur à 1, par exemple compris entre 0,9 et 1. Ainsi, on augmente les chances de commencer la surveillance avant l'arrivée de la réponse R, et donc de détecter l'arrivée de la réponse R dès qu'elle se produit. Alternativement encore, le rapport de proportion est pris supérieur à 1, par exemple compris entre 1 et 1,1. Ainsi, on augmente les chances de commencer la surveillance après l'arrivée de la réponse R ou bien peu de temps avant, ce qui permet de diminuer la durée de la surveillance.

Pendant l'intervalle de temps I, comme le premier dispositif 102 ne surveille pas l'arrivée de messages, il peut réaliser d'autres tâches. Par exemple, le temps d'unité de traitement libéré peut être utilisé par le programme P1 pour réaliser d'autres tâches. Alternativement, le programme P1 peut se mettre en sommeil pendant l'intervalle de temps I, ce qui laisse plus de temps d'unité de traitement au programme P2 pour exécuter d'autres tâches.

Par ailleurs, l'utilisation de l'accusé de réception AR avec le délai estimé D évite que le premier dispositif 102 ne renvoie la requête lorsque le délai de réponse est long. Ainsi, les ressources du réseau de commutation 106 sont économisées.

Au cours d'une étape 228, une fois l'intervalle de temps I écoulé, le premier dispositif 102 commence à surveiller l'arrivée de messages.

Au cours d'une étape 230, le deuxième dispositif 104 envoie la réponse R au premier dispositif 102.

Au cours d'une étape 232, la réponse R arrive au premier dispositif 102.

Au cours d'une étape 234, le premier dispositif 102, qui est en train de surveiller l'arrivée de messages, détecte l'arrivée de la réponse R et la récupère. Le premier dispositif 102 arrête alors la surveillance de l'arrivée de messages et traite la réponse R.

La réponse R comporte par exemple les données requises dans la requête Rq, ou bien, lorsque le deuxième dispositif 104 n'a pas réussi à obtenir ces données requises, une indication d'échec.

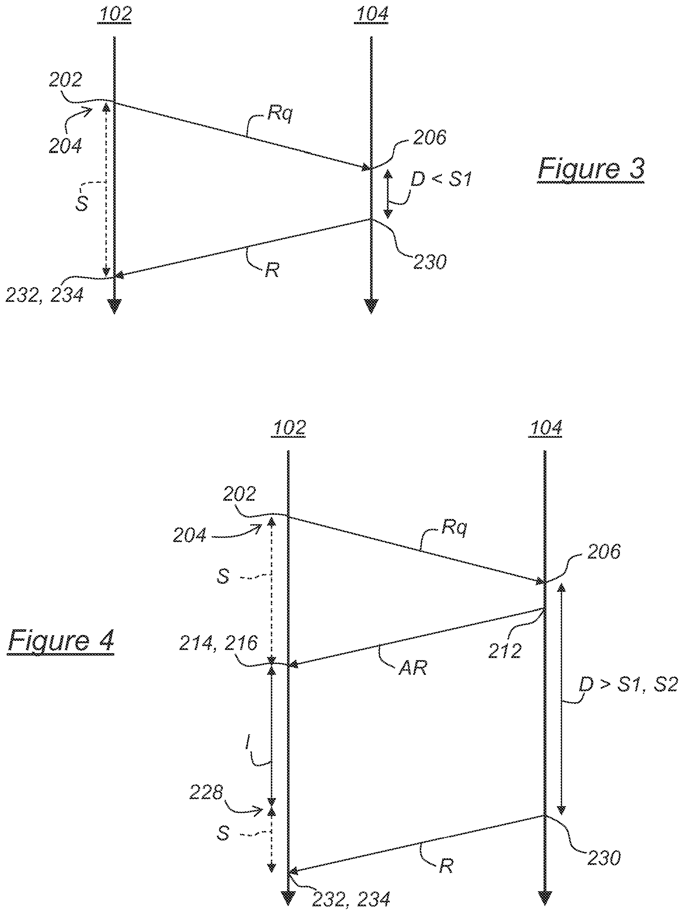

En référence à la figure 3, le procédé 200 est illustré sous la forme d'un chronogramme où deux flèches verticales représentent des lignes de temps de respectivement les premier et deuxième dispositifs 102, 104. La double flèche désignée par la référence « S » indique la surveillance de l'arrivée de messages. Le procédé 200 est illustré dans le cas où le délai estimé D est inférieur au seuil S1, c'est-à-dire dans le cas où le mécanisme d'accusé de réception n'est pas mis en œuvre.

En référence à la figure 4, le procédé 200 est illustré sous la forme d'un chronogramme similaire à celui de la figure 3, mais dans le cas où le délai estimé D est supérieur à la fois au seuil S1 et au seuil S2. Comme cela est visible sur la figure 4, le premier dispositif 102 peut réaliser d'autres tâches que celle de surveillance de l'arrivée de messages, pendant tout l'intervalle de temps I. En l'absence de l'invention, la surveillance aurait dû s'étendre de l'étape 202 à l'étape 232.

Il apparaît clairement qu'un système et un procédé de communication tels que ceux décrits précédemment permettent d'optimiser l'utilisation des ressources matérielles du premier dispositif.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, il est possible de se passer des deux étapes de comparaison 210, 218 pour toujours envoyer l'accusé de réception AR avant la réponse R. Alternativement, puisque les deux étapes de comparaison 210, 218 ont à peu près la même fonction, à savoir ne pas chercher à réduire le temps de surveillance lorsque le délai estimé D est trop court, il est possible de ne garder qu'une seule de ces deux étapes 210, 218 de comparaison.

En outre, il est possible de remplacer l'étape de comparaison 210 par une étape au cours de laquelle le deuxième dispositif 104 détermine s'il a besoin d'accéder à un dispositif parmi une liste prédéterminée de dispositifs considérés comme lents. Un dispositif lent est par exemple un disque dur en veille ou un dispositif connecté au réseau de communication 106. Si un tel accès n'est pas nécessaire, le procédé passe directement à l'étape 230, sinon il passe à l'étape 212.

En outre, les programmes P1, P1' pourraient être composés chacun de plusieurs programmes.

En outre, le procédé 200 décrit précédemment suppose que les messages échangés sont conformes à un protocole de communication convenu entre les deux dispositifs 102, 104. En particulier, si la requête Rq n'est pas conforme au protocole, le deuxième dispositif 104 renverra, à la place de l'accusé de réception AR et de la réponse R, un message de refus de la requête Rq.

En outre, l'envoi d'un accusé de réception ne veut pas obligatoirement dire qu'une réponse positive sera envoyée par le deuxième dispositif 104. En effet, même après avoir envoyé un accusé de réception AR, le deuxième dispositif 104 peut toujours envoyer par la suite une réponse R indiquant un échec, par exemple lorsque le deuxième dispositif 104 détecte une erreur (par exemple, une ressource nécessaire qui est devenue indisponible) après l'envoi de l'accusé de réception.

Par ailleurs, bien que l'exemple décrit présente des dispositifs 102, 104 qui sont des dispositifs informatiques mettant en œuvre des programmes d'ordinateur, l'invention n'est pas limitée à ce cas de figure. En effet, les fonctions associées aux instructions du ou des programmes d'ordinateur pourraient être au moins en partie micro programmées ou micro câblées dans des circuits intégrés dédiés. Ainsi, en variante, chacun des programme P1, P1' pourrait être remplacé par un dispositif électronique composé uniquement de circuits numériques (sans programme d'ordinateur) pour la réalisation des mêmes fonctions.

## Revendications

1. Procédé (200) de communication entre des premier et deuxième dispositifs (102, 104) connectés l'un à l'autre, le procédé comportant les étapes suivantes :
- le premier dispositif (102) envoie (202) une requête (Rq) au deuxième dispositif (104),
- le deuxième dispositif (104) reçoit (206) la requête (Rq),
- le deuxième dispositif (104) envoie (230) au premier dispositif (102) une réponse (R) à la requête (Rq),
- le premier dispositif (102) reçoit (234) la réponse (R),
- le deuxième dispositif (104) estime (210) un délai (D) au bout duquel le deuxième dispositif (104) pourra envoyer la réponse (R),
- avant d'envoyer la réponse (R), le deuxième dispositif (104) envoie (212) un accusé de réception (AR) au premier dispositif (102), l'accusé de réception (AR) comportant le délai estimé (D),
- le premier dispositif (102) reçoit (216) l'accusé de réception (AR),
- le premier dispositif (102) calcule (222) un intervalle de temps (I) à partir du délai estimé (D),
- le premier dispositif (102) laisse s'écouler (226) l'intervalle de temps (I) avant de commencer à surveiller l'arrivée de messages pour détecter l'arrivée de la réponse (R),
**caractérisé en ce que** :
- le deuxième dispositif (104) détermine s'il a besoin d'accéder à un dispositif parmi une liste prédéterminée de dispositifs, et
- l'étape d'envoi (212) par le deuxième dispositif (104) de l'accusé de réception (AR) est réalisée si un tel accès est nécessaire et n'est pas réalisée dans le cas contraire, de même que les autres étapes dépendant de l'envoi de l'accusé de réception (AR).

2. Procédé (200) selon la revendication 1, comportant en outre l'étape suivante :
- le deuxième dispositif (104) compare (210) le délai estimé (D) à un premier seuil (S1),
et dans lequel l'étape d'envoi (212) par le deuxième dispositif (104) de l'accusé de réception (AR), est réalisée si le délai estimé (D) est supérieur au premier seuil (S1) et n'est pas réalisée dans le cas contraire, de même que les autres étapes dépendant de l'envoi de l'accusé de réception (AR).

3. Procédé (200) selon la revendication 2, dans lequel le délai estimé (D) est égal à une moyenne de délais constatés par le deuxième dispositif (104) pour répondre à des requêtes auxquelles le deuxième dispositif (104) a précédemment répondu.

4. Procédé (200) selon l'une quelconque des revendications 1 à 3, comportant en outre l'étape suivante :
- le premier dispositif (102) compare (218) le délai estimé (D) à un deuxième seuil (S2),
et dans lequel l'étape de calcul (222) par le premier dispositif (102) de l'intervalle de temps (I) est réalisée si le délai estimé (D) est supérieur au deuxième seuil (S2) et n'est pas réalisée dans le cas contraire, de même que l'étape consistant à laisser s'écouler (226) l'intervalle de temps (I) avant de commencer à surveiller l'arrivée de messages.

5. Procédé (200) selon l'une quelconque des revendications 1 à 4, dans lequel l'intervalle de temps (I) est pris proportionnel au délai estimé (D), selon un rapport de proportion prédéfini.

6. Système de communication (100) comportant des premier et deuxième dispositifs (102, 104) connectés l'un à l'autre, le premier dispositif (102) comportant des moyens logiciels et/ou matériels pour :
- envoyer une requête (Rq) au deuxième dispositif (104),
- recevoir, de la part du deuxième dispositif (104), un accusé de réception (AR) comportant un délai estimé (D) au bout duquel le deuxième dispositif (104) pourra envoyer une réponse (R) à la requête (Rq),
- calculer un intervalle de temps (I) à partir du délai estimé (D),
- laisser s'écouler l'intervalle de temps (I) avant de commencer à surveiller l'arrivée de messages pour détecter l'arrivée de la réponse (R),
- recevoir la réponse (R),
et le deuxième dispositif (104) comportant des moyens logiciels et/ou matériels pour :
- recevoir la requête (Rq),
- estimer le délai (D) au bout duquel le deuxième dispositif (104) pourra envoyer la réponse (R),
- envoyer, avant d'envoyer la réponse (R), l'accusé de réception (AR) au premier dispositif (102), l'accusé de réception (AR) comportant le délai estimé (D),
- envoyer la réponse (R),
**caractérisé en ce que** le deuxième dispositif (104) comporte en outre des moyens logiciels et/ou matériels pour :
- déterminer s'il a besoin d'accéder à un dispositif parmi une liste prédéterminée de dispositifs, et
- réaliser l'envoi (212) de l'accusé de réception (AR) si un tel accès est nécessaire et ne pas le réaliser dans le cas contraire, les autres étapes dépendant de l'envoi de l'accusé de réception (AR) n'étant alors pas réalisées non plus.

## Patentansprüche

1. Verfahren (200) zur Kommunikation zwischen einer ersten und einer zweiten Vorrichtung (102, 104), die miteinander verbunden sind, wobei das Verfahren die folgenden Schritte umfasst:
- die erste Vorrichtung (102) sendet (202) eine Anfrage (Rq) an die zweite Vorrichtung (104),
- die zweite Vorrichtung (104) empfängt (206) die Anfrage (Rq),
- die zweite Vorrichtung (104) sendet (230) an die erste Vorrichtung (102) eine Antwort (R) auf die Anfrage (Rq),
- die erste Vorrichtung (102) empfängt (234) die Antwort (R),
- die zweite Vorrichtung(104) schätzt (210) eine Verzögerung (D), nach der die zweite Vorrichtung (104) die Antwort (R) senden kann,
- vor dem Senden der Antwort (R) sendet (212) die zweite Vorrichtung (104) eine Empfangsbestätigung (AR) an die erste Vorrichtung (102), wobei die Empfangsbestätigung (AR) die geschätzte Verzögerung (D) umfasst,
- die erste Vorrichtung (102) empfängt (216) die Empfangsbestätigung (AR),
- die erste Vorrichtung (102) berechnet (222) ein Zeitintervall (I) aus der geschätzten Verzögerung (D),
- die erste Vorrichtung (102) lässt das Zeitintervall (I) verstreichen (226), bevor sie mit der Überwachung des Eintreffens von Nachrichten beginnt, um das Eintreffen der Antwort (R) zu erkennen,
**dadurch gekennzeichnet, dass:**
- die zweite Vorrichtung (104) bestimmt, ob sie auf eine Vorrichtung aus einer vorbestimmten Liste von Vorrichtungen zugreifen muss, und
- der Schritt des Sendens (212) der Empfangsbestätigung (AR) durch die zweite Vorrichtung (104) durchgeführt wird, wenn ein solcher Zugriff erforderlich ist, und andernfalls nicht durchgeführt wird, ebenso wie die anderen Schritte, die vom Senden der Empfangsbestätigung (AR) abhängig sind.

2. Verfahren (200) nach Anspruch 1, ferner umfassend den folgenden Schritt:
- die zweite Vorrichtung (104) vergleicht (210) die geschätzte Verzögerung (D) mit einem ersten Schwellenwert (S1),
und wobei der Schritt des Sendens (212) der Empfangsbestätigung (AR) durch die zweite Vorrichtung (104) durchgeführt wird, wenn die geschätzte Verzögerung (D) größer als der erste Schwellenwert (S1) ist, und andernfalls nicht durchgeführt wird, ebenso wie die anderen Schritte, die vom Senden der Empfangsbestätigung (AR) abhängig sind.

3. Verfahren (200) nach Anspruch 2, wobei die geschätzte Verzögerung (D) gleich einem Durchschnitt von Verzögerungen ist, die von der zweiten Vorrichtung (104) festgestellt wurden, um auf Anfragen zu antworten, auf die die zweite Vorrichtung (104) zuvor geantwortet hat.

4. Verfahren (200) nach einem der Ansprüche 1 bis 3, ferner umfassend den folgenden Schritt:
- die zweite Vorrichtung (102) vergleicht (218) die geschätzte Verzögerung (D) mit einem zweiten Schwellenwert (S2),
und wobei der Schritt des Berechnens (222) des Zeitintervalls (I) durch die erste Vorrichtung (102) durchgeführt wird, wenn die geschätzte Verzögerung (D) größer als der zweite Schwellenwert (S2) ist, und andernfalls nicht durchgeführt wird, ebenso wie der Schritt, der darin besteht, das Zeitintervall (I) verstreichen zu lassen (226), bevor mit der Überwachung des Eintreffens von Nachrichten begonnen wird.

5. Verfahren (200) nach einem der Ansprüche 1 bis 4, wobei das Zeitintervall (I) proportional zur geschätzten Verzögerung (D) gemäß einer vordefinierten Proportionalität genommen wird.

6. Kommunikationssystem (100), umfassend eine erste und eine zweite Vorrichtung (102, 104), die miteinander verbunden sind, wobei die erste Vorrichtung (102) Software- und/oder Hardwaremittel umfasst, um:
- eine Anfrage (Rq) an die zweite Vorrichtung (104) zu senden,
- von der zweiten Vorrichtung (104) eine Empfangsbestätigung (AR) zu empfangen, die eine geschätzte Verzögerung (D) umfasst, nach der die zweite Vorrichtung (104) eine Antwort (R) auf die Anfrage (Rq) senden kann,
- ein Zeitintervall (I) aus der geschätzten Verzögerung (D) zu berechnen,
- das Zeitintervall (I) verstreichen zu lassen, bevor mit der Überwachung des Eintreffens von Nachrichten begonnen wird, um das Eintreffen der Antwort (R) zu erkennen,
- die Antwort (R) zu erhalten,
und wobei die zweite Vorrichtung (104) Software- und/oder Hardwaremittel umfasst, um:
- die Anfrage (Rq) zu empfangen,
- die Verzögerung (D) zu schätzen, nach der die zweite Vorrichtung (104) die Antwort (R) senden kann,
- vor dem Senden der Antwort (R) die Empfangsbestätigung (AR) an die erste Vorrichtung (102) zu senden, wobei die Empfangsbestätigung (AR) die geschätzte Verzögerung (D) umfasst,
- die Antwort (R) zu senden,
**dadurch gekennzeichnet, dass** die zweite Vorrichtung (104) ferner Software- und/oder Hardwaremittel umfasst, um:
- zu bestimmen, ob sie auf eine Vorrichtung aus einer vorbestimmten Liste von Vorrichtungen zugreifen muss, und
- das Senden (212) der Empfangsbestätigung (AR) durchzuführen, wenn ein solcher Zugriff erforderlich ist, und dies andernfalls nicht durchzuführen, wobei die anderen Schritte, die vom Senden der Empfangsbestätigung (AR) abhängig sind, dann ebenfalls nicht durchgeführt werden.

## Claims

1. A method (200) for communication between first and second devices (102, 104) connected to one another, the method comprising the following steps:
- the first device (102) sends (202) a request (Rq) to the second device (104),
- the second device (104) receives (206) the request (Rq),
- the second device (104) sends (230) to the first device (102) a response (R) to the request (Rq),
- the first device (102) receives (234) the response (R),
- the second device (104) estimates (210) a time delay (D) after which the second device (104) can send the response (R),
- before sending the response (R), the second device (104) sends (212) an acknowledgment of receipt (AR) to the first device (102), the acknowledgment of receipt (AR) comprising the estimated time delay (D),
- the first device (102) receives (216) the acknowledgment of receipt (AR),
- the first device (102) calculates (222) a time interval (I) from the estimated time delay (D),
- the first device (102) allows the time interval (I) to elapse (226) before starting to monitor the arrival of messages in order to detect the arrival of the response (R),
**characterized in that:**
- the second device (104) determines whether it needs to access a device from a predetermined list of devices, and
- the step of sending (212) the acknowledgment of receipt (AR) by the second device (104) is carried out if such an access is necessary and is not carried out otherwise, as well as the other steps that are dependent on the sending of the acknowledgment of receipt (AR).

2. The method (200) according to claim 1, further comprising the following step:
- the second device (104) compares (210) the estimated time delay(D) with a first threshold (S1),
and wherein the step of sending (212) the acknowledgment of receipt (AR) by the second device (104), is carried out if the estimated time delay(D) is greater than the first threshold (S1) and is not carried out otherwise, as well as the other steps that are dependent on the sending of the acknowledgment of receipt (AR).

3. The method (200) according to claim 2, wherein the estimated time delay (D) is equal to an average of the time delays observed by the second device (104) in order to respond to requests to which the second device (104) has previously responded.

4. The method (200) according to any one of claims 1 to 3, further comprising the following step:
- the first device (102) compares (218) the estimated time delay (D) with a second threshold (S2)
and wherein the step of calculating (222) the time interval (I) by the first device (102) is carried out if the estimated time delay (D) is greater than the second threshold (S2) and is not carried out otherwise, as well as the step that consists of allowing the time interval (I) to elapse (226) before starting to monitor the arrival of messages.

5. The method (200) according to any one of claims 1 to 4, wherein the time interval (I) is taken to be proportional to the estimated time delay (D), according to a predefined proportion ratio.

6. A communication system (100) comprising first and second devices (102, 104) connected to one another, the first device (102) comprising software and/or hardware means for:
- sending a request (Rq) to the second device (104),
- receiving, from the second device (104), an acknowledgement of receipt (AR) comprising an estimated time delay (D) at the end of which the second device (104) may send a response (R) to the request (Rq),
- calculating a time interval (I) from the estimated time delay(D),
- allowing the time interval (I) to elapse before starting to monitor the arrival of messages in order to detect the arrival of the response (R),
- receiving the response (R),
and the second device (104) comprising software and/or hardware means for:
- receiving the request (Rq),
- estimating the time delay (D) at the end of which the second device (104) may send the response (R),
- sending, before sending the response (R), the acknowledgment of receipt (AR) to the first device (102), the acknowledgment of receipt (AR) comprising the estimated time delay (D),
- sending the response (R),
**characterized in that** the second device (104) further comprises software and/or hardware means for:
- determining whether it needs to access a device from a predetermined list of devices, and
- carrying out sending (212) the acknowledgment of receipt (AR) if such an access is necessary and not carrying it out otherwise, in which case the other steps that depend on sending the acknowledgment of receipt (AR) are also not carried out.
